# EUROPÄISCHE PATENTSCHRIFT

(11) **EP 3 303 892 B1**
(45) Veröffentlichungstag und Bekanntmachung des Hinweises auf die Patenterteilung: **26.07.2023**
(21) Anmeldenummer: 16757139.7
(22) Anmeldetag: 26.05.2016
(51) Int. Cl.: F16L 3/13, F16B 2/16, F16B 2/22, F16L 3/16, F16L 3/223, F16L 3/237

(54) **HALTEELEMENT**
RETAINING ELEMENT
ÉLÉMENT DE MAINTIEN

(30) Priorität: 27.05.2015 DE 202015102745 U; 27.01.2016 DE 202016100388 U
(43) Veröffentlichungstag der Anmeldung: 11.04.2018
(73) Patentinhaber: Flint, Sören, 02943 Weißwasser (DE)
(72) Erfinder: Flint, Sören, 02943 Weißwasser (DE)
(74) Vertreter: Weissfloh, Ingo
(86) Internationale Anmeldenummer: PCT/DE2016/100244
(87) Internationale Veröffentlichungsnummer: WO 2016/188519

(56) Entgegenhaltungen:
- DE-A1- 4 228 305
- DE-U1- 8 414 242
- US-A- 4 655 424
- US-A- 5 323 992
- US-A1- 2013 094 164
- US-A1- 2015 053 294

## Beschreibung

Die Erfindung betrifft ein Halteelement, das dazu dient, zwei oder mehrere Objekte zu verbinden. Insbesondere dient das Halteelement dazu, ein mobiles Objekt an einem feststehenden Objekt zu befestigen.

Die Erfindung stellt ein Halteelement mit mindestens einer aus Haltefingern bestehenden Halteeinheit bereit. Dabei weist die Halteeinheit Haltefinger mit kugelförmigen Abschlüssen auf. Darüber hinaus sind Halteelemente vorgesehen, bei denen Halteeinheiten mit Haltefingern mit anderen Befestigungseinheiten, wie beispielsweise Saugnäpfen, Haken, Ösen, Ringen, Schlaufen, Klammern, Zwingen, Schellen, Magneten, Klettverschlusselementen, Halteplatten, Klickverbindungen oder Schraubverbindungen kombiniert werden.

Halteelemente sind in unterschiedlichen Ausführungen bekannt. Sie bestehen vorzugsweise aus elastischem Kunststoff oder Metall und sind zur Befestigung von Rohrleitungen oder Schläuchen gebräuchlich. So ist beispielsweise aus der DE 1813029 U1 eine um 90 Grad verdrehte Doppelklemme bekannt. In der DE 19955654 A1 ist eine verdrehbare Doppelschelle offenbart, die eine unterschiedliche Ausrichtung der zu verbindenden Objekte ermöglicht.

Aus der DE 202004000120 U1 ist beispielsweise eine Schlauchhalterung zum Festklemmen an einem Behälterrand bekannt.

Weiterhin sind Bürettenklemmen mit drei Haltefingern bekannt, wobei hier zwei der Haltefinger starr miteinander verbunden sind.

Die US 2013/0094164 A1 offenbart ein Halteelement mit zwei Haltefingern mit einem Kugelabschluss, wobei die Kugelabschlüsse sich berühren und auf der den Haltfingern gegenüberliegenden Seite ein Widerhaken vorhanden ist.

Die US 4,655,424 A offenbart eine Rohr- oder Leitungsschelle mit Klemmbacken, zwischen denen die Rohre oder Leitungen einklemmbar sind, wobei auf der den Klemmbacken gegenüberliegenden Seite ein Widerhaken vorhanden ist.

Die US 2015/0053294 A1 offenbart ein Halteelement mit zwei Haltefingern mit einem Kugelabschluss, wobei die Kugelabschlüsse sich nicht berühren und auf der den Haltfingern gegenüberliegenden Seite eine Gewindekappe vorhanden ist.

Die DE 84 14 242 U1 offenbart ein Halteelement als Abbinder mit zwei Haltefingern mit einem Kugelabschluss, wobei die Kugelabschlüsse sich nicht berühren und die Haltfingern an einem Dübel angeordnet sind.

DE 42 28 305 A1 offenbart eine Rohr- oder Leitungsschelle mit Klemmbacken, zwischen denen ein Rohr oder eine Leitung einklemmbar ist, wobei auf der den Klemmbacken gegenüberliegenden Seite zwei weitere Klemmbacken kleineren Querschnitts vorhanden ist.

Die US 5,323,992 A offenbart eine Rohr- oder Leitungsschelle mit drei versetzt zueinander angeordneten Klemmbacken, zwischen denen ein Rohr oder eine Leitung einklemmbar ist.

Die Aufgabe der Erfindung besteht darin, ein universal nutzbares kostengünstiges Halteelement zur Verfügung zu stellen. Das Halteelement soll aus Komponenten bestehen, die eine Modifikation des Halteelementes ermöglichen und so vielfältige Ausgestaltungen des Halteelementes bereitstellen. Die Halteelemente sollen variabel ausführbar und somit für ein breites Einsatzspektrum nutzbar sein.

Erfindungsgemäß wird die Aufgabe mit den Merkmalen des Hauptanspruchs gelöst.

Die Erfindung löst die Aufgabenstellung mit den Merkmalen des Hauptanspruchs. Das Halteelement besteht aus mindestens zwei miteinander verbundenen Halteeinheiten oder einer Halteeinheit mit einer daran angedockten Befestigungseinheit. Die Halteeinheiten dienen dabei der Aufnahme des jeweiligen Objektes, das in diesem Bereich eine längsgestreckte Form, wie beispielsweise eine zylindrische Form, aufweist. Damit können die zu verbindenden Objekte zum Beispiel Stiele, Stäbe, Schläuche, Rohre, Stifte, aber auch Platten sein.

Die Halteeinheiten bestehen aus mindestens zwei auf einer Seite miteinander an einer Verbindungsstelle verbundenen Haltefingern, die die zu haltenden Objekte umgreifen. Der Abschluss der Haltefinger ist jeweils als Kugel ausgebildet.

Die Kugelform verstärkt das Umgreifen der zu haltenden Objekte. Zugleich erleichtert die Kugelform das Einführen des Objekts in die jeweilige Halteeinheit. Weiterhin verhindert die Kugelform das Herausrutschen des zu haltenden Objektes.

In einer nicht erfindungsgemäßen Variante besteht das Halteelement aus mindestens einer Halteeinheit, wobei die Halteeinheit aus mindestens zwei auf einer Seite miteinander an einer Verbindungsstelle verbundenen Haltefingern besteht, wobei mindestens ein Haltefinger mit einem kugelförmigen Abschluss versehen ist und mindestens ein weiterer Haltefinger ohne kugelförmigen Abschluss ausgeführt ist. Die Halteeinheit besitzt dann vorteilhaft ein Durchgangsloch zur Aufnahme einer Befestigungseinheit. Diese Befestigungseinheit kann zum Befestigen der Halteeinheit an einem Objekt dienen und an dieser Befestigungseinheit kann ein Gegenstand angehangen oder befestigt werden.

In einer weiteren nicht erfindungsgemäßen Variante weist eine Halteeinheit einen Haltefinger mit einem kugelförmigen Abschluss auf, der beispielsweise das zu haltende Objekt gegen einen zweiten Haltefinger ohne kugelförmigen Abschluss drückt und damit das zu haltende Objekt hält.

Weitere vorteilhafte Ausgestaltungen der Erfindung sind in den Unteransprüchen offenbart. Gemäß einer vorteilhaften Weiterbildung bestehen die Halteelemente aus einem elastischen Material, wie beispielsweise Gummi oder elastischem Kunststoff. Die elastische Ausführung ermöglicht es, die Objekte von der offenen Seite her zwischen die zurückweichenden Haltefinger zu drücken, die sich dann wieder in Richtung ihrer Ausgangsposition zurückbewegen.

Entsprechend einer Weiterbildung der Erfindung sind die kugelförmigen Abschlüsse mit den Haltefingern lösbar verbunden. Die lösbare Verbindung ermöglicht es auch bei einer starren Ausführung der Halteelemente, die Objekte zu verbinden. Die kugelförmigen Abschlüsse werden nach dem Einführen des Objektes zwischen die Haltefinger an diesen befestigt und verhindern damit das Lösen des Objektes aus der Halteeinheit.

Einer zweckmäßigen Ausführung entsprechend weisen die Haltefinger eine gebogene Form auf, wobei sich der Abstand der Haltefinger von der Verbindungsstelle ausgehend zunächst vergrößert. Diese Ausgestaltung schafft durch einen kompatiblen Querschnitt entsprechenden Platz für durch das Halteelement aufzunehmende Objekte mit rundem Querschnitt.

Gemäß einer Ausführung der Erfindung besteht mindestens eine der Halteeinheiten aus drei Haltefingern. Drei Haltefinger ermöglichen eine Befestigung eines Objektes mit beispielsweise zylindrischem Querschnitt oder einer Platte, wobei durch die entsprechend ausgeführte Halteeinheit ein gewisser Widerstand gegen ein Verdrehen des Objekts um das Halteelement aufgebracht wird.

Entsprechend einer Ausgestaltung der Erfindung besteht mindestens eine der Halteeinheiten aus vier Haltefingern. Damit können zwei Objekte befestigt werden, wobei wiederum eine Hemmung gegen Verdrehen besteht. Bei diesen Ausführungen mit drei oder vier Haltefingern können z. B. wie teilweise in den Figuren dargestellt sich kreuzende Stäbe miteinander verbunden bzw. gegeneinander gehalten werden.

Die Formulierung "zumindest eine der Halteeinheit" verweist darauf, dass ein Haltelement Halteeinheiten mit einer unterschiedlichen Anzahl von Haltefinger in sich vereinigen kann. So sind Haltelemente entsprechend in unterschiedlichen zweckmäßigen Kombinationen ausführbar, wie beispielsweise mit zwei/drei Haltefingern oder drei/drei oder zwei/vier Haltefingern.

Gemäß einer vorteilhaften Weiterbildung der Erfindung sind die Halteeinheiten sich einander gegenüberliegend angeordnet. Diese gebräuchlichste Ausführung ermöglicht es, vielfältige Verbindungen zwischen zwei Objekten zueinander zu realisieren.

Entsprechend einer Ausgestaltung der Erfindung sind die Halteeinheiten in einem Winkel zueinander angeordnet. Damit können zweckmäßige dreidimensionale Verbindungen zwischen entsprechend angeordneten Objekten ausgeführt werden. Dadurch, dass bei drei oder vier Haltefingern je Halteeinheit die Objekte in unterschiedlicher Weise zwischen den Haltefingern eingebracht werden können, ergeben sich durch die Halteeinheit vielfältige Möglichkeiten, die Objekte zueinander anzuordnen. Die Objekte können dabei auch unterschiedlich ausgerichtet sein.

Einer vorteilhaften Weiterbildung der Halteeinheit entsprechend sind die Haltefinger der Halteeinheiten in einer gleichen Ebene angeordnet. Damit können beispielsweise zueinander parallel ausgerichtete Objekte miteinander verbunden werden.

Gemäß einer zweckmäßigen Ausgestaltung des Halteelements sind die Haltefinger der Halteeinheiten in unterschiedlichen Ebenen angeordnet. Eine Ebene ergibt sich aus der Stellung der Haltefinger einer Halteeinheit zueinander. Durch die unterschiedlichen Ebenen der Haltefinger ergeben sich unterschiedliche Objektebenen für die zu haltenden Objekte. Entsprechend können Objekte in unterschiedlichen Ebenen zueinander miteinander verbunden werden.

Gemäß einer vorteilhaften Weiterbildung entsprechend sind die Haltefinger mit einer, zwei oder mehreren Verdickungen versehen. Längere Haltefinger, die dafür vorgesehen sind, mehrere Objekte in eine Halteeinheit aufzunehmen, können entlang ihrer Längsausdehnung eine oder mehrere Verdickungen aufweisen. Diese Verdickungen bilden einen Widerstand gegen das Lösen der einzelnen zu haltenden Elemente.

In einer weiteren nicht erfindungsgemäßen Variante weisen der/die Haltefinger ohne kugelförmigen Abschluss mindestens eine ebene Anlagefläche auf. Die Anlagefläche dient zur Anlage des Objektes an den Haltefinger. Das Halten des Objektes wird durch den kugelförmigen Abschluss an einem Haltefinger erreicht. Die ebene Anlagefläche des Haltefingers ohne kugelförmigen Abschluss bewirkt eine gewisse Ausrichtung des/der zu haltenden Objekte, die vom Anpressdruck der Haltefinger an die Anlagefläche abhängig ist.

Bei einer weiteren vorteilhaften Variante der Erfindung ist die Halteeinheit mit einer Befestigungseinheit verbunden. Dabei können die Befestigungseinheiten beispielsweise als Saugnäpfe, Haken, Ösen, Ringe, Schlaufen, Klammern, Zwingen, Schellen, Magnete, Klettverschlusselemente, Halteplatten, Klickverbindungen und/oder Schraubverbindungen ausgebildet sein. Somit ist es möglich, die Halteeinheit mit herkömmlichen Befestigungseinheiten zu kombinieren. Entsprechend können die jeweils besten Befestigungs- bzw. Halteeinheiten zur Arretierung der jeweiligen Objekte miteinander kombiniert und somit entsprechend unterschiedliche, den Einsatzzwecken angepasste Halteelemente ausgebildet werden. Weiterhin ist es denkbar, dass die Befestigungseinheit von der Halteeinheit trennbar gestaltet ist und durch eine andere Befestigungseinheit ersetzt wird. Saugnäpfe ermöglichen es, das Halteelement an glatten Oberflächen zu befestigen. Mit Schauben direkt oder in Verbindung mit Halteplatten können die Halteelemente an entsprechenden Objekten durch Schraubverbindungen befestigt werden. Haken, Ösen, Ringe, Schlaufen und Klammern sind dazu geeignet, entsprechende Objekte an dem Halteelement zu befestigen. Ebenso bieten Klammern, Zwingen, Schellen, Magnete, Klettverschlusselemente und Klickverbindungen vielfältige Möglichkeiten der Verbindung der Halteelemente mit oder an entsprechenden Objekten.

Vorteilhafte Ausführungsbeispiele der Erfindung werden anhand der Zeichnungen näher erläutert.

Es zeigen:
Fig. 1 ein als einfache Doppelklemme ausgeführtes Halteelement,
Fig. 2 ein als Doppelklemme ausgeführtes Halteelement mit unterschiedlichen Halteebenen,
Fig. 3 ein Halteelement mit winklig angeordneten Halteeinheiten,
Fig. 4 eine Halteeinheit mit drei Haltefingern in Draufsicht, aufgesteckt auf einer Platte,
Fig. 5 ein Halteelement mit einer Halteeinheit aus zwei Haltefingern kombiniert mit einer Halteeinheit aus drei Haltefingern,
Fig. 6 ein Halteelement mit zwei mal drei Haltefingern in unterschiedlichen Ebenen,
Fig. 7 ein Halteelement in Draufsicht mit vier Haltefingern und kreuzweise eingebrachten Objekten,
Fig. 8, ein Halteelement in Draufsicht mit vier Haltefingern und parallel eingebrachten Objekten und
Fig. 9 eine Perspektivdarstellung eines Halteelementes mit zwei Halteeinheiten, die zwei und vier Haltefinger umfassen,
Fig. 10 ein Haltefinger mit Auswölbungen.
Fig. 11 eine nicht erfindungsgemäße Variante eines Halteelementes mit Saugnapf,
Fig. 12 eine nicht erfindungsgemäße Variante eines Halteelementes mit Gewindebolzen,
Fig. 13 eine nicht erfindungsgemäße Variante eines Halteelementes mit Saugnapf an einem Haltefinger,
Fig. 14 eine nicht erfindungsgemäße Variante eines Halteelementes einer Halteeinheit mit vier Haltefingern in Draufsicht,
Fig. 15 eine nicht erfindungsgemäße Variante eines Halteelementes eine Halteeinheit mit fünf Haltefingern,
Fig. 16 eine Halteeinheit mit drei Haltefingern mit einem Durchgangsloch mit Innengewinde im Bereich der Verbindungsstelle und
Fig. 17 eine Halteeinheit mit drei Haltefingern mit einem Durchgangsloch im Bereich der Verbindungsstelle.

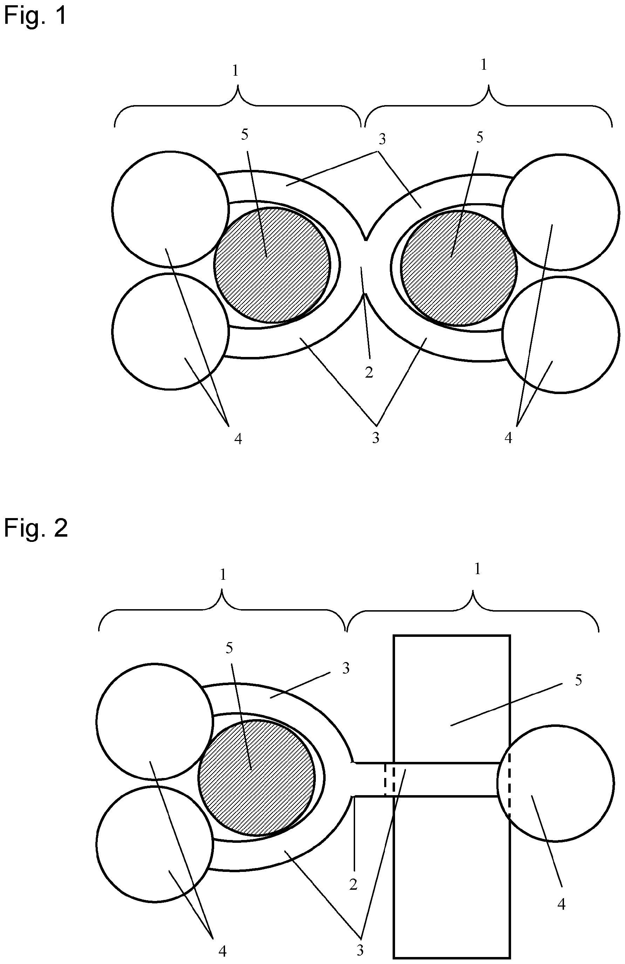

In Figur 1 ist ein Halteelement dargestellt, das als einfache Doppelklemme ausgeführt ist. Die beiden Halteeinheiten 1 halten jeweils ein Objekt 5 mit kreisförmigem Querschnitt. Die Halteeinheiten 1 bestehen hier aus jeweils zwei Haltefingern 3, die an der Verbindungsstelle 2 miteinander und hier auch mit dem gegenüberliegenden Halteelement 1 verbunden sind. Die Haltefinger 3 enden in einem kugelförmigen Abschluss 5. Das Objekt 5 wird jeweils von den Haltefingern 3 und kugelförmigen Abschlüssen 5 umgriffen/umschlossen. Hier sind die Haltefinger 3 beider Halteeinheiten 1 in der selben Ebene angeordnet, woraus sich die Lage der Objekte 5 in der selben Ebene ergibt.

Die nachfolgenden Figurenbeschreibungen stellen jeweils die Unterschiede zu der in Fig. 1 beschriebenen Basisausführung heraus und beziehen sich somit auf diese.

Die Figur 2 zeigt ein als Doppelklemme ausgeführtes Halteelement mit unterschiedlichen Halteebenen. Die Darstellung der links dargestellten Halteeinheit 1 stimmt mit der in Figur 1 dargestellten Halteeinheit 1 überein. Die rechts dargestellte Halteeinheit 1 gleicht ebenfalls den Halteeinheiten aus Fig. 1. Der Unterschied besteht darin, dass die rechte Halteeinheit um 90 Grad gegenüber der linken Halteeinheit 1 verdreht ist. Die Halteebenen ergeben sich aus der Stellung der Haltefinger 3 zueinander. Aus der um 90 Grad zueinander verdrehten Haltefinger 3 ergibt sich entsprechend eine Verdrehung der beiden Objekte 5 um 90 Grad zueinander.

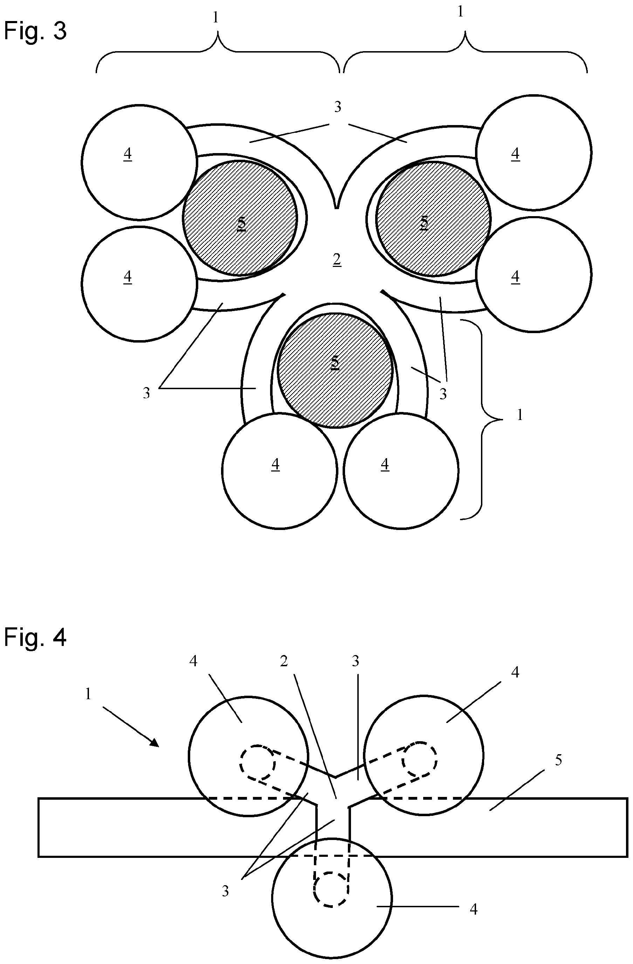

In Figur 3 ist ein Halteelement mit winklig zueinander angeordneten Halteeinheiten 1 gezeigt. Die unten dargestellte Halteeinheit 1 ist im rechten Winkel zu den beiden oben gezeigten gegenüberliegenden Halteeinheiten 1 dargestellt. Dabei können einer Ausgestaltung entsprechend auch die Halteeinheiten 1 zueinander verdreht ausgeführt sein. Ebenso können die Halteeinheiten 1 an unterschiedlichen Stellen miteinander verbunden sein.

Die Figur 4 zeigt die Halteeinheit 1 eines Halteelementes mit drei Haltefingern 3 von oben. Die Haltefinger 3 sind von der Verbindungsstelle ausgehend im Winkel von 120 Grad zueinander angeordnet. Ebenso ist ein in die Halteeinheit 1 eingeklemmtes Objekt 5 dargestellt. Dadurch, dass das Objekt 5 auf einer Seite an zwei Haltefingern 3 mit kugelförmigem Abschluss 4 anliegt und vom gegenüber angeordneten, unten dargestellten Haltefinger 3 durch die elastische Ausführung dagegen gedrückt wird, besteht ein erhöhter Widerstand gegen das Verdrehen des Objekts 5 bezogen auf die Halteeinheit 1. Deutlich wird, dass das Objekt 5 hier in drei unterschiedlichen Ausrichtungen in die Halteeinheit 1 eingebracht werden kann.

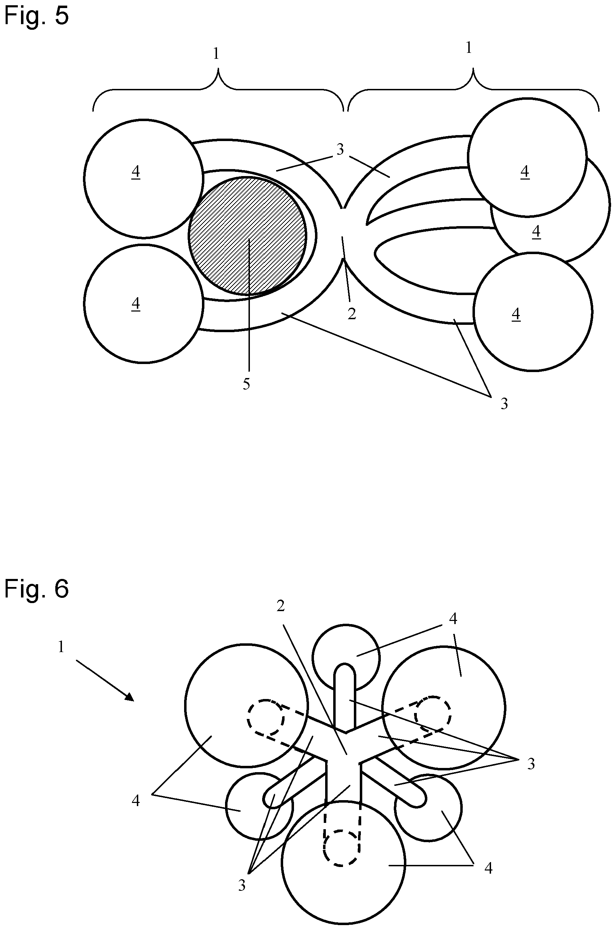

In Figur 5 ist ein Halteelement mit einer Halteeinheit 1 aus zwei Haltefingern 3 auf der linken Seite und einer Halteeinheit 1 aus drei Haltefingern 3 auf der rechten Seite gezeigt. Damit ist eine Perspektivdarstellung eines Halteelementes angegeben, das aus einer Kombination der Ausführungen mit zwei Haltefingern 3 und drei Haltefingern, wie Figur 1 und Figur 3 dargestellt, besteht.

Die Figur 6 zeigt ein Halteelement mit drei Haltefingern 3 auf beiden Seiten in einer Ansicht von oben. Zur besseren Unterscheidbarkeit sind die Haltefinger 3 und die kugelförmigen Abschlüsse 4 im Hintergrund kleiner dargestellt. Durch die unterschiedlichen Ausrichtungen der Haltefinger 3 im Vordergrund und im Hintergrund ist es möglich, die Objekte (nicht dargestellt) in unterschiedlichen Ebenen auszurichten. Selbstverständlich können die Halteelemente so ausgeführt werden, dass die Haltefinger 3 eine unterschiedliche Größe beziehungsweise Länge und die kugelförmigen Abschlüsse 4 eine unterschiedliche Größe haben.

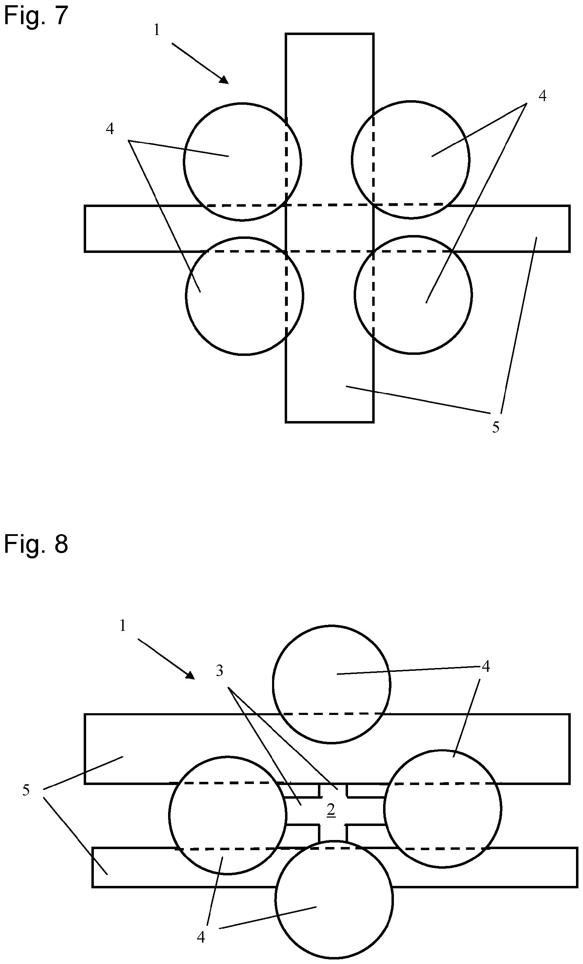

Die Figur 7 zeigt eine Halteeinheit 1 mit vier Haltefingern (nicht sichtbar) von oben. Die zwischen die Haltefinger mit den kugelförmigen Abschlüssen 4 eingebrachten Objekte 5 sind hier kreuzweise übereinander in der Halteeinheit 1 positioniert.

In Figur 8 ist eine Halteeinheit 1 wie aus Figur 7 bekannt mit vier Haltefingern 3 dargestellt. Hier sind die stabförmigen Objekte 5 parallel zwischen den Haltefingern 3 mit den kugelförmigen Abschlüssen 4 festgeklemmt.

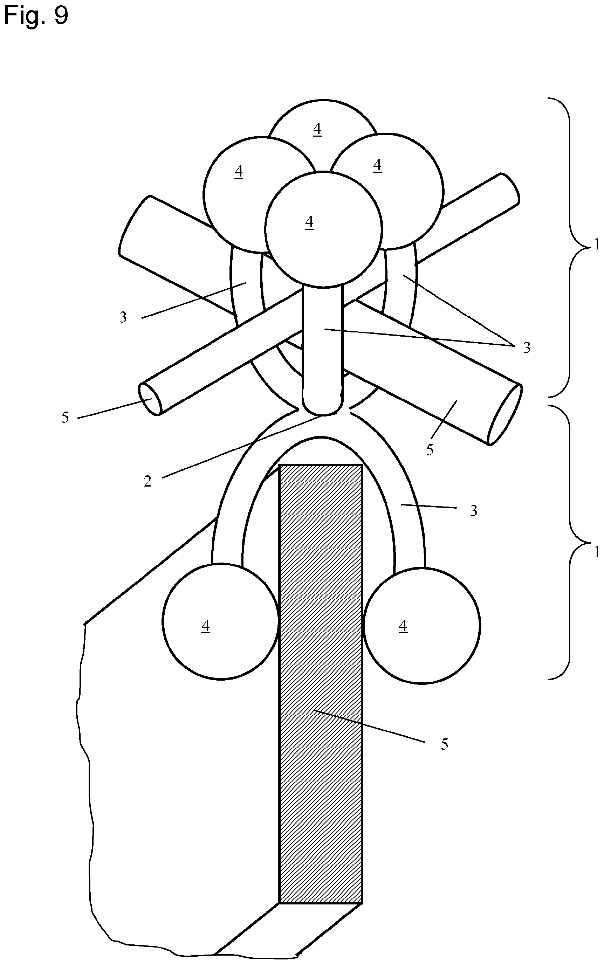

Figur 9 zeigt eine Perspektivdarstellung eines Halteelementes mit zwei Halteeinheiten 1. Die untere Halteeinheit 1 umfasst zwei Haltefinger 3 mit kugelförmigen Abschlüssen 4. Die Haltefinger 3 sind hier an einem plattenförmigen Objekt 5, beispielsweise einer Tischplatte, festgeklemmt. Die gegenüberliegenden vier Haltefinger 3 umgreifen zwei kreuzweise zueinander angeordnete, als Rundstäbe ausgeführte Objekte 5, wie auch in Figur 7 dargestellt.

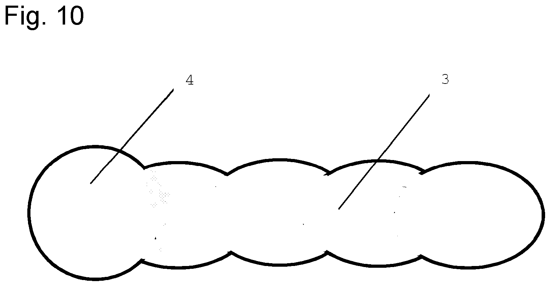

Die Haltefinger 3 können auch über ihre Länge verteilt Verdickungen, wie in Figur 10 dargestellt, besitzen. Diese Verdickungen ermöglichen eine gewisse Rastung beim Aufschieben der Halteelemente.

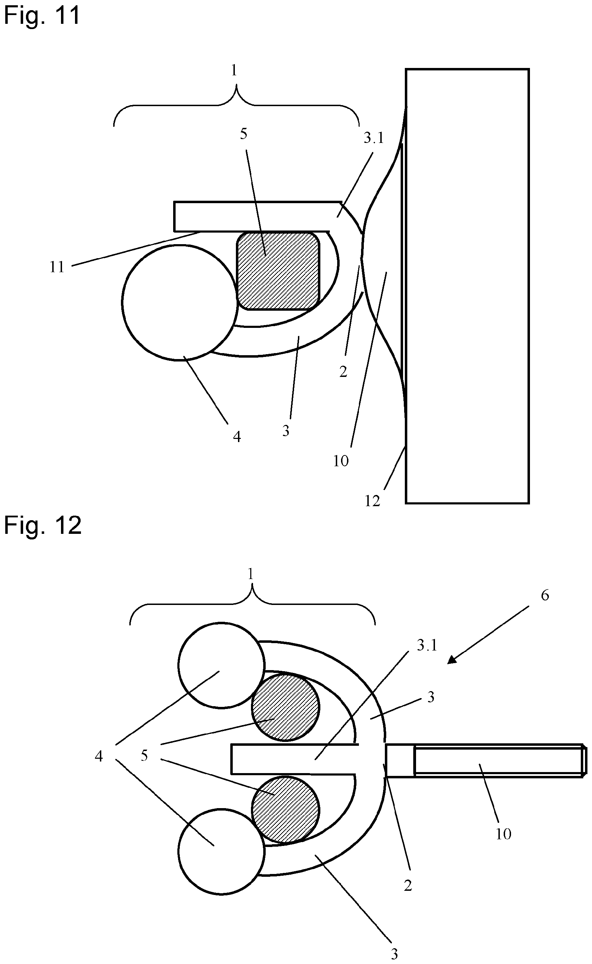

In Figur 11 ist ein Halteelement mit einem Saugnapf 10 als Befestigungseinheit 10 dargestellt. Der Saugnapf 10 ist besonders dafür geeignet, das Halteelement durch Unterdruck an einer glatten Oberfläche 12, wie beispielsweise einer Wandfliese, zu befestigen. An der Verbindungsstelle 2 der Haltefinger 3, 3.1 der Halteeinheit 1 sind diese mit dem Saugnapf 10 verbunden.

Die beiden Haltefinger 3, 3.1 des Halteelementes 1 sind unterschiedlich ausgeführt. Ein Haltefinger 3 ist mit einem kugelförmigen Abschluss 4 versehen. Der zweite gegenüberliegende Haltefinger 3.1 ist ohne kugelförmigen Abschluss 4 ausgeführt und bildet beispielsweise eine ebene Anlagefläche 11 für das zu haltende Objekt 5. Durch das Anliegen des Objektes 5 an die ebene Anlagefläche 11 kann das Objekt 5 ausgerichtet werden. Damit eignet sich diese Ausführung insbesondere für Objekte 5 mit einer flächigen Begrenzung.

Die Figur 12 zeigt ein Halteelement mit einem Gewindebolzen 10 als Befestigungseinheit 10. Mit dem Gewindebolzen 10 kann eine Schraubverbindung zur Befestigung an einem anderen Bauteil realisiert werden. Beispielsweise ist eine Befestigung mittels Dübel (nicht dargestellt) in einer Wand möglich. Die Halteeinheit 1 ist hier mit drei Haltefingern 3, 3.1 ausgeführt, wobei der obere und der untere Haltefinger 3 mit einem kugelförmigen Abschluss 4 versehen sind und der mittlere Haltefinger 3.1 ohne kugelförmigen Abschluss 4 ausgeführt ist.

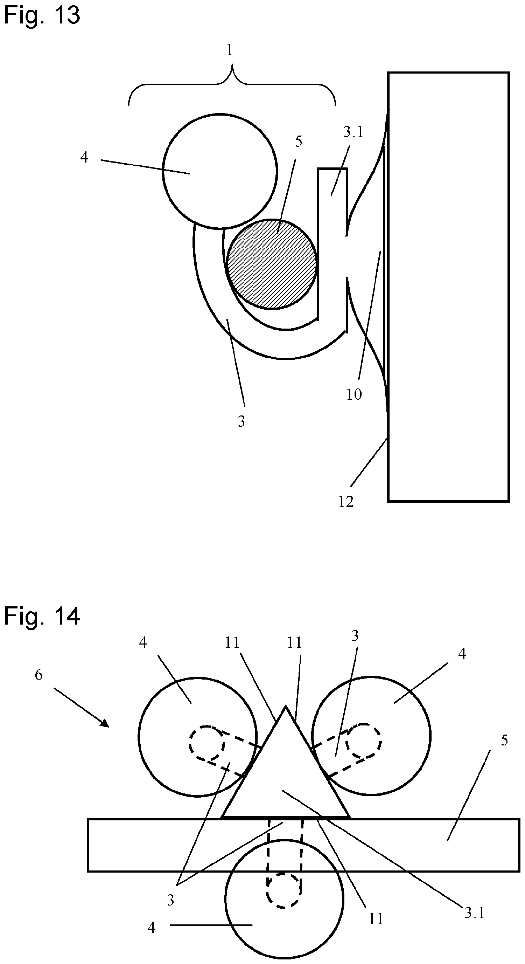

In Figur 13 ist ein aus Figur 11 abgeleitetes Halteelement mit einem an einem Haltefinger 3 befestigten Saugnapf 10 dargestellt. Somit ist die Verbindungsstelle 2 zur Befestigungseinheit 10 an dem Haltefinger 3.1 ohne kugelförmigen Abschluss angeordnet.

Die Figur 14 zeigt eine Halteeinheit 1 mit vier Haltefingern 3, 3.1 in einer Draufsicht. Der mittlere Haltfinger 3.1 ohne kugelförmigen Abschluss ist mit dreieckigem Querschnitt und ebenen Anlageflächen 11 ausgeführt. Hier ermöglichen die ebenen Anlageflächen 11 eine Ausrichtung der Objekte 5 mit einem Winkel von 120 Grad zueinander.

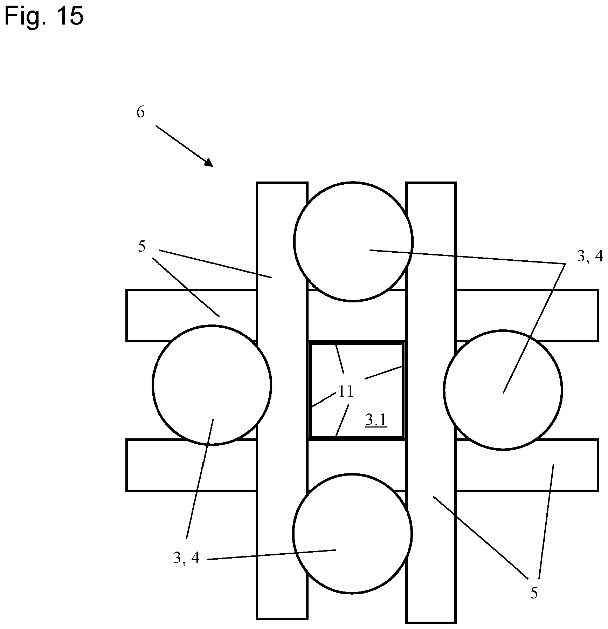

In Figur 15 ist eine Halteeinheit 1 mit fünf Haltefingern 3, 3.1 dargestellt. Der zentral angeordnete Haltefinger 3.1 ohne kugelförmigen Abschluss weist einen quadratischen Querschnitt mit entsprechenden ebenen Anlageflächen 11 auf. Damit können die zu haltenden Objekte 5 in einem Winkel von 90 zueinander ausgerichtet werden. Insgesamt werden hier vier Objekte 5 gehalten, wobei jeweils zwei Objekte 5 parallel zueinander orientiert sind.

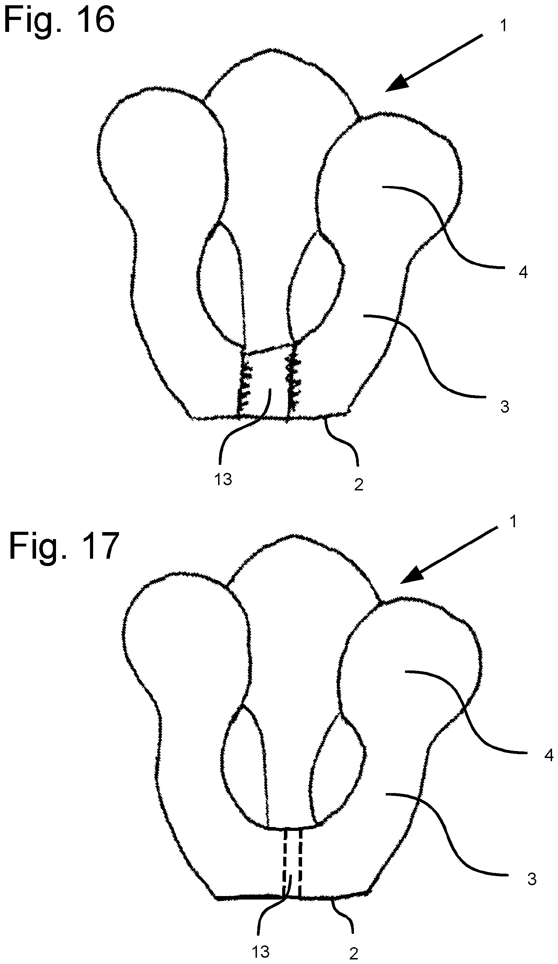

In den Figuren 16 und 17 besitzen die Halteeinheiten 1 im Bereich der Verbindungsstelle 2, also im Bereich der Befestigung der Haltefinger 3, ein Durchgangsloch 13 mit oder ohne Gewinde in den unterschiedlichsten Durchmessergrößen. Dieses Durchgangsloch 13 kann einmal zur Befestigung der Halteeinheit 1 an Objekten 5, wie z. B. Wände, Bretter, Balken usw. mittels Schrauben oder Nägeln, dienen. Bei der Ausführungsvariante mit einem Durchgangsloch 13 mit Innengewinde, kann das Objekt 5 ebenfalls mit einem Gewindestab versehen sein und somit eine sichere Verbindung ermöglichen. Das Durchgangsloch 13 mit Innengewinde kann aber auch Befestigungselemente, wie Haken mit einem Gewindeende aufnehmen. In diesem Fall dienen die Haltefinger 3 mit den kugelförmigen Abschluss 4 zur Befestigung der Halteeinheit 1 an einem Objekt 5 und z. B. der Haken zum Anhängen von Gegenständen.

Es ist jedoch auch denkbar, dass zwei Halteeinheiten 1 nach Figur 16 mit einem Stab, welcher an beiden Enden mit einem passenden Gewinde für das Gewindeloch 13 versehen ist, miteinander verbunden sind und somit ein komplettes Halteelement mit zwei Halteeinheiten bilden. Der Stab kann hier auch als Teleskopstab oder nur als ein Verbindungsstift mit Gewinde ausgeführt sein. Diese Ausführungsform kann jedoch z. B. auch als Halteelement an einem Erdanker verwendet werden. Der Erdanker muss hierzu nur einen passenden Gewindestift als Verbindungselement zum Halteelement besitzen. Ein Einsatzort wäre hier z. B. eine Beregnungsanlage im Garten, die sich leicht an einer anderen Stelle im Garten umsetzen lässt.

Die dargestellten Figuren zeigen beispielhaft die vielfältigen Ausführungsvarianten der Halteelemente und Halteeinheiten und deren vielseitige Einsatzmöglichkeiten an.

### Zusammenstellung der Bezugszeichen

- 1 -: Halteeinheit
- 2 -: Verbindungsstelle
- 3 -: Haltefinger
- 3.1 -: Haltefinger ohne kugelförmigen Abschluss
- 4 -: kugelförmiger Abschluss, Kugel
- 5 -: Objekt
- 6 -: Haltelement
- 10 -: Befestigungseinheit, Saugnapf, Gewindebolzen
- 11 -: ebene Anlagefläche
- 12 -: glatte Oberfläche
- 13 -: Durchgangsloch, Gewindeloch

## Patentansprüche

1. Halteelement,
- bestehend aus mindestens einer Halteeinheit (1), die aus mindestens drei auf einer Seite miteinander an einer Verbindungsstelle (2) verbundenen Haltefingern (3) besteht und wobei an der Verbindungsstelle (2) gegenüber den Haltefingern (3) eine Befestigungseinheit (10) angeordnet ist
oder
- bestehend aus mindestens einer Halteeinheit (1), die aus mindestens zwei auf einer Seite miteinander an einer Verbindungsstelle (2) verbundenen Haltefingern (3) besteht und wobei an der Verbindungsstelle (2) gegenüber den Haltefingern (3) eine weitere Halteeinheit (1) angeordnet ist, wobei diese weitere Halteeinheit (1) aus mindestens zwei auf dieser Seite miteinander an einer Verbindungsstelle (2) verbundenen Haltefingern (3) besteht, wobei alle Haltefinger (3) aller Halteeinheiten mit einem als Kugel ausgebildeten Abschluss (4) versehen sind.

2. Halteelement nach Anspruch 1,
**dadurch gekennzeichnet,**
**dass** die Befestigungseinheit (10) als Saugnapf, Haken, Öse, Ring, Schlaufe, Klammer, Zwinge, Schelle, Magnet, Klettverschlusselement, Halteplatte, Klickverbinder oder Schraubverbindung ausgebildet ist.

3. Haltelement nach einem der vorhergehenden Ansprüche,
**dadurch gekennzeichnet,**
**dass** die Halteeinheit (1) und die Befestigungseinheit (10) voneinander trennbar gestaltet sind.

4. Halteelement nach einem der vorhergehenden Ansprüche,
**dadurch gekennzeichnet,**
**dass** die Halteelemente aus einem elastischen Material bestehen.

5. Halteelement nach einem der vorhergehenden Ansprüche,
**dadurch gekennzeichnet,**
**dass** die als Kugel ausgebildeten Abschlüsse (4) mit den Haltefingern (3) lösbar verbunden sind.

6. Halteelement nach einem der vorhergehenden Ansprüche,
**dadurch gekennzeichnet,**
**dass** die Haltefinger (3) Verdickungen aufweisen, im Querschnitt eine runde, dreieckige oder quadratische Form besitzen und eine gerade oder eine gebogene Form aufweisen, wobei sich der Abstand der Haltefinger (3) untereinander einer Halteeinheit (1) von der Verbindungsstelle (2) ausgehend zunächst vergrößert und später gleich bleibt oder wieder verkleinert.

7. Halteelement nach einem der vorhergehenden Ansprüche,
**dadurch gekennzeichnet,**
**dass** die Halteeinheiten (1) eines Haltelementes die gleiche Anzahl von Haltefingern (3) oder eine unterschiedliche Anzahl von Haltefingern (3) besitzen und die Länge der Haltefinger pro Halteeinheit (1) gleich lang ist, aber die andere Halteeinheit (1) kürzere oder längere Haltefinger (3) besitzt.

8. Halteelement nach einem der vorhergehenden Ansprüche,
**dadurch gekennzeichnet,**
**dass** die Halteeinheiten (1) gegenüberliegend oder in einem Winkel zueinander angeordnet sind.

9. Halteelement nach einem der vorhergehenden Ansprüche,
**dadurch gekennzeichnet,**
**dass** die Haltefinger (3) der Halteeinheiten (1) in derselben Ebene oder in unterschiedlichen Ebenen angeordnet sind.

## Claims

1. Holding element,
- consisting of at least one holding unit (1) which consists of at least three retaining fingers (3) connected to one another on one side at a connection point (2) and wherein a fixing unit (10) is arranged at the connection point (2) opposite the retaining fingers (3)
or
- consisting of at least one holding unit (1), which consists of at least two retaining fingers (3) connected to one another on one side at a connection point (2) and wherein a further holding unit (1) is arranged at the connection point (2) opposite the retaining fingers (3), wherein this further holding unit (1) consists of at least two retaining fingers (3) connected to one another on this side at a connection point (2), wherein all retaining fingers (3) of all holding units are provided with a termination (4) in the form of a ball.

2. Holding element according to claim 1,
**characterised in**
**that** the fixing unit (10) is in the form of a suction cup, hook, eyelet, ring, loop, clamp, clip, magnet, hook and loop fastening element, retaining plate, click or screwed connection.

3. Holding element according to one of the preceding claims,
**characterised in**
**that** the holding unit (1) and the fixing unit (10) are designed to be separable from one another.

4. Holding element according to one of the preceding claims,
**characterised in**
**that** the holding elements consist of an elastic material.

5. Holding element according to one of the preceding claims,
**characterised in**
**that** the terminations (4) formed as a ball are connected to the retaining fingers (3) in a detachable way.

6. Holding element according to one of the preceding claims,
**characterised in**
**that** the retaining fingers (3) show thickenings, have a round, triangular or square shape in cross-section and a straight or a curved shape, whereas the spacing of the retaining fingers (3) from one another of a holding unit (1) initially increasing starting from the connection point (2) and later remaining the same or decreasing again.

7. Holding element according to one of the preceding claims,
**characterised in**
**that** the holding units (1) of a holding element have the same number of retaining fingers (3) or a different number of retaining fingers (3) and the length of the retaining fingers per holding unit (1) is the same, but the other holding unit (1) has shorter or longer retaining fingers (3) .

8. Holding element according to one of the preceding claims,
**characterised in**
**that** the holding units (1) are arranged opposite or at an angle to each other.

9. Holding element according to one of the preceding claims,
**characterised in**
**that** the retaining fingers (3) of the holding units (1) are arranged in the same plane or in different planes.

## Revendications

1. Élément de maintien,
- constitué d'au moins une unité de maintien (1), qui est constituée au moins de trois doigts de maintien (3) reliés sur un côté entre eux sur un emplacement de liaison (2) et d'une unité de fixation (10) étant disposée à l'emplacement de liaison (2), en vis-à-vis des doigts de maintien (3),
ou
- constitué d'au moins une unité de maintien (1), qui est constituée au moins de deux doigts de maintien (3) reliés sur un côté entre eux sur un emplacement de liaison (2) et d'une unité de maintien (1) supplémentaire étant disposée à l'emplacement de liaison (2), en vis-à-vis des doigts de maintien (3), cette unité de maintien (1) supplémentaire étant constituée au moins de deux doigts de maintien (3) reliés sur un côté entre eux sur un emplacement de liaison (2), tous les doigts de maintien (3) de toutes les unités de maintien étant pourvus d'une terminaison (4) de forme sphérique.

2. Élément de maintien selon la revendication 1,
**caractérisé en ce que**
l'unité de fixation (10) est réalisée sous la forme d'une ventouse, d'un crochet, d'un anneau, d'une bague, d'une boucle, d'une virole, d'un collier, d'un aimant, d'un élément de fermeture autoagrippante, d'une plaque de retenue, d'une boucle à clip ou d'un raccord à vis.

3. Élément de maintien selon l'une des revendications précédentes,
**caractérisé en ce que**
l'unité de maintien (1) et l'unité de fixation (10) sont conçues de sorte à pouvoir être séparées l'une de l'autre.

4. Élément de maintien selon l'une des revendications précédentes,
**caractérisé en ce que**
les éléments de maintien sont constitués d'un matériau élastique.

5. Élément de maintien selon l'une des revendications précédentes,
**caractérisé en ce que**
les terminaisons (4) de forme sphérique sont reliées de façon amovible aux doigts de maintien (3).

6. Élément de maintien selon l'une des revendications précédentes,
**caractérisé en ce que**
les doigts de maintien (3) présentent des épaississements, possèdent une section de forme ronde, triangulaire ou carrée et sont de forme droite ou courbe, sachant que la distance entre les doigts de maintien (3) d'une unité de maintien (1) en partant de l'emplacement de liaison (2) s'agrandit dans un premier temps, puis reste la même ou s'amenuise de nouveau.

7. Élément de maintien selon l'une des revendications précédentes,
**caractérisé en ce que**
les unités de maintien (1) d'un élément de maintien possèdent le même nombre de doigts de maintien (3) ou un nombre de doigts de maintien (3) différent et que la longueur des doigts de maintien est la même pour tous les doigts d'une unité de maintien (1), mais que l'autre unité de maintien (1) possède des doigts de maintien (3) plus courts ou plus longs.

8. Élément de maintien selon l'une des revendications précédentes,
**caractérisé en ce que**
les unités de maintien (1) sont disposées en vis-à-vis ou à un angle l'une par rapport à l'autre.

9. Élément de maintien selon l'une des revendications précédentes,
**caractérisé en ce que**
les doigts de maintien (3) des unités de maintien (1) sont disposés dans le même plan ou dans un plan différent.
